# EUROPÄISCHE PATENTSCHRIFT

(11) **EP 1 533 315 B1**
(45) Veröffentlichungstag und Bekanntmachung des Hinweises auf die Patenterteilung: **28.12.2005**
(21) Anmeldenummer: 04026207.3
(22) Anmeldetag: 04.11.2004
(51) Int. Cl.: C07F 7/12

(54) **Verfahren zur Herstellung von Aklylchlorsilanen aus den Rückständen der Direktsynthese von Alkylchlorsilanen**
Process for the preparation of alkylchlorosilanes from the residues obtained in the direct process of alkylchlorosilanes
Procédé de préparation de alkylchlorosilanes à partir du résidu obtenu par le procédé direct

(30) Priorität: 20.11.2003 DE 10354262
(43) Veröffentlichungstag der Anmeldung: 25.05.2005
(73) Patentinhaber: Wacker-Chemie GmbH, 81737 München (DE)
(72) Erfinder: Straussberger, Herbert, 84561 Mehring (DE)
(74) Vertreter: Fritz, Helmut

(56) Entgegenhaltungen:
- EP-A- 0 635 510
- US-A- 2 681 355
- US-A- 5 877 337

## Beschreibung

Die Erfindung betrifft ein kontinuierliches Verfahren zur Herstellung von Alkylchlorsilanen, bei dem die Rückstände aus der Direktsynthese von Alkylchlorsilanen mit Chlorwasserstoff thermisch gespalten werden.

Bei der Direktsynthese von Alkylchlorsilanen der allgemeinen Formel RₐH_{b}SiCl_{4-a-b}, in der a die Werte 1, 2, 3 oder 4 und b die Werte 0, 1 oder 2 bedeuten, aus Siliciummetall und Alkylchloriden R-Cl, wobei R einen Alkylrest bedeutet, entstehen als Nebenprodukte Oligosilane, Carbosilane, Siloxane und hochsiedende Crackprodukte. Darüber hinaus finden sich in den Rückständen Feststoffe aus der Direktsynthese, die als Feinstanteil auch durch Cyclone und Filter nicht zurückgehalten werden. Die Feststoffe bestehen aus Silicium, Metallchloriden, z.B. AlCl₃, Metallsiliciden und Ruß.

Den überwiegenden Teil dieser Rückstände machen die Oligosilane, besonders die Disilane der allgemeinen Formel R_{c}Cl_{6-c}Si₂, in der c die Werte 0 - 6, bedeutet, aus. Es können aber auch Silanverbindungen mit mehr als 2 Si-Si Bindungen enthalten sein, wie Trisilane.

In der US-A-2,681,355, ist ein kontinuierliches Verfahren beschrieben, bei dem unkatalysiert und rein thermisch, höher als 70 °C siedende Rückstände der Direktsynthese von Methylchlorsilanen im von aussen erhitzten Leerrohr mit Chlorwasserstoff bei Temperaturen von 400 - 900 °C unter Bildung von monomeren Silanen umgesetzt werden. Dabei werden grosse Anteile an Nebenprodukten, wie z.B. Carbosilane und Polymere gebildet. Ebenso entstehen Feststoffen durch Verkokung der Rückstände an den heissen Reaktorwänden.

In der US 2002/0183537 A1 ist ein Verfahren zur thermischen Spaltung der Rückstände aus der Direktsynthese von Alkylchlorsilanen beschrieben, bei dem der erforderliche Chlorwasserstoff aus H₂ und Cl₂ im gleichen Verfahrensschritt hergestellt wird. Der Reaktor ist kompliziert aufgebaut und das Verfahren deshalb schlecht zu steuern. Es treten leicht lokale Überhitzungen auf, die die Bildung von Nebenprodukten fördern. Zudem können chlorierte Kohlenwasserstoffe und chlorierte Alkylchlorsilane entstehen.

In US-A-5,877,337 ist ein kontinuierliches Verfahren zur Herstellung von Alkylchlorsilanen aus den Rückständen der Direktsynthese von Alkylchlorsilanen beschrieben, bei dem die Rückstände mit Chlorwasserstoff bei Temperaturen von 300 bis 800 °C in einem Rohrreaktor mit drehbaren Einbauten erhitzt werden. Die sich an der Reaktorwand abscheidenden Feststoffe werden durch die drehbaren Einbauten entfernt.

Es bestand die Aufgabe, ein einfach durchführbares Verfahren zur Herstellung von Alkylchlorsilanen aus den Rückständen der Direktsynthese von Alkylchlorsilanen bereitzustellen, welches wenig Nebenprodukte liefert.

Gegenstand der Erfindung ist ein kontinuierliches Verfahren zur Herstellung von Alkylchlorsilanen aus den Rückständen der Direktsynthese von Alkylchlorsilanen, welche flüssige Bestandteile mit einem Siedepunkt von mindestens 70°C bei 1013 hPa und gegebenenfalls Feststoffe aufweisen mit Chlorwasserstoff, bei dem die Rückstände mit höchstens 200 °C und Chlorwasserstoff mit einer entsprechend höheren Temperatur von mindestens 450 °C in einen Reaktor eingeleitet werden, so dass sich eine Reaktionstemperatur von 400 bis 800 °C einstellt.

Das Verfahren liefert aus Rückständen der Direktsynthese von Alkylchlorsilanen verwertbare Silane. Es ist einfach durchzuführen und kann bei geringen Drücken ausgeführt werden. Im Vergleich mit dem in US-A-2,681,355 beschriebenen Verfahren entstehen weniger Nebenprodukte, insbesondere weniger feste Rückstände an den Reaktorwänden.

Vorzugsweise werden Alkylchlorsilane der vorstehenden allgemeinen Formel hergestellt, in der R einen Methyl-, Ethyl-, Butyl- oder Propylrest, insbesondere einen Methylrest bedeutet.

Im wesentlichen weisen die Rückstände der Direktsynthese flüssige Bestandteile mit einem Siedepunkt von mindestens 80°C, insbesondere mindestens 100°C bei 1013 hPa auf.

Die Rückstände werden mit höchstens 200 °C, insbesondere höchstens 180 °C in einen Reaktor eingespeist, um eine Polymerisierung zu vermeiden.
Der Chlorwasserstoff wird, als ein Gesamtstrom oder auch unterteilt in mehrere Teilströme mit unterschiedlichen Temperaturniveaus in den Reaktor eingeleitet. Das Temperaturniveau des zugegebenen Chlowasserstoffs ist so hoch zu wählen, dass sich im Reaktor eine Reaktionstemperatur von 400 bis 800 °C einstellt. Die Erhitzung der Reaktanden auf Reaktionstemperatur erfolgt somit durch direkten Wärmeaustausch untereinander. Vorzugsweise beträgt die Temperatur des zugegebenen Chlorwasserstoffs mindestens 500 °C und höchstens 850 °C, insbesondere höchstens 800 °C.

Die Stoffströme werden vorzugsweise kontinuierlich dosiert. Die Vermischung erfolgt im Reaktor bevorzugt über eine Ein- oder Zweistoff-Düse. In einer Einstoff-Düse werden die vorzugsweise flüssigen Rückstände verdüst. In einer Zweistoff-Düse erfolgt die Verdüsung der vorzugsweise flüssigen Rückstände und des Chlorwasserstoffs, wobei von Chlorwasserstoff nur ein Teil oder auch die gesamte eingesetzte Menge verdüst werden kann.

Vorzugsweise werden die Si-Si-Bindungen der in den Rückständen vorhandenen Di- und Oligosilane gespalten. Eingesetzt wird vorzugsweise mindestens die den im Rückstand enthaltenen Si-Si-Bindungen molar äquivalente Menge an Chlorwasserstoff, jedoch nicht mehr als die 150-fache molare Menge. Bevorzugt eingesetzt wird die 1- bis 60-fache molare Menge. Im Anschluss an die Reaktion kann die überschüssige Menge an Chlorwasserstoff nach dem Abtrennen der gebildeten Alkylchlorsilane, z.B. durch Kondensation, ganz oder teilweise wieder in den Reaktor zurückgeführt werden oder einer anderen Verwendung zugeführt werden.

Um isotherme Reaktionsbedingungen zu schaffen besteht der Reaktor, vorzugsweise ein Rohrreaktor, am besten aus einem Mantel, der direkt oder indirekt bis 800 °C temperierbar ist. Zur Beheizung kommen hochtemperaturbeständige Fluide, elektrische Widerstandsbeheizung, Induktionsheizung oder Kombinationen davon in Frage. Weitere Varianten der Temperaturhaltung ist eine direkte Kühlung z. B durch Einspritzen und Verdampfen von Silanen mit einer Siedetemperatur unter 100°C, sowie der Regelung der HCl Temperatur bzw. der Einpeisemenge an Hochsiedern.

Der Reaktor wird von 400 bis 800 °C, bevorzugt von 550 bis 700 °C betrieben. Der Druck beträgt vorzugsweise 1000 bis 10000 hPa, insbesondere 1000 bis 3000 hPa.

Das Verhältnis Länge zu Durchmesser des Reaktors beträgt mindestens 0,5, bevorzugt mindestens 5. Der Reaktor kann waagerecht oder bevorzugt senkrecht betrieben werden.

Der Rückstand und der Chlorwasserstoff können im Gegenstrom oder Gleichstrom dosiert werden. Gegebenenfalls können für einen Strom mehrere Dosierstellen über die Reaktorlänge verteilt existieren.

Das aus dem Reaktor austretende Gemisch wird kondensiert, beispielsweise in Quenche oder Wärmetauscher, gegebenenfalls von Feststoffen befreit und kann dem bei der Direktsynthese erzeugten Alkylchlorsilangemisch wieder zugeführt werden oder auch separat in Reinsubstanzen aufgetrennt werden.

Wenn die Rückstände feinkörnige Feststoffe enthalten, bringt die Hitzebehandlung als positiven Nebeneffekt eine Sinterung der Feststoffpartikel mit sich, die dann suspendiert im kondensierten Produkt vorliegen. Dadurch lassen sich schwer filtrierbare, gegebenenfalls kolloidal verteilte Feststoffe in filtrierbare Anteile überführen.

### Beispiel

Soweit nicht anders angegeben sind alle Mengen- und Prozentangaben auf das Gewicht bezogen, alle Drücke 0,10 MPa (abs.) und alle Temperaturen 20 °C.

Ein hochsiedender Rückstand aus der Direktsynthese von Methylchlorsilanen wurde eingesetzt, der laut GC bestand aus:
42% Disilanen (Mischung aus 1,1,1,3,3,3 Hexamethyldisilan, 1-Chlorpentamethyldisilan, 1,3,-Dichlortetramethyldisilan, 1,1-Dichlortetramethyldilsilan, 1,1,2, Trichlortrimethyldisilan und 1,1,3,3, Tetrachlordimethyldisilan),.
6% Siloxanen der allgemeinen Formel ClₓMe₃₋ₓSiOSiMe_{3-y}Cl_{y}, wobei x, y jeweils 0-3 bedeuten,
17% Silamethylenen (Carbosilanen) der allgemeinen Formel ClₓMe₃₋ₓSiCH₂SiMe_{3-y}Cl_{y}, wobei x, y jeweils 0-3 bedeuten,
16% Alkylchlorsilanen mit Alkylgruppen, die grösser als CH₃ waren, sowie
19% nicht identifizierten Verbindungen in jeweils geringer Konzentration.

In ein leeres, senkrecht stehendes Rohr von 1800 mm Länge und 128 mm Durchmesser mit eingebauter Düse wurde der hochsiedende Rückstand flüssig über eine Pumpe dosiert. Auf 750°C vorerhitzter Chlorwasserstoff wurde der Düse über eine separate Leitung zugeführt. Das Reaktionsrohr wurde durch Zuführung von elektrischer Energie auf einer Temperatur von 550°C gehalten. Im Gasraum des Reaktors stellte sich ein Temperaturprofil von 430-600°C ein.

Das unten aus dem Rohr austretende gasförmige Produktgemisch wurde über eine Serie von Kühlern auf ca. -5°C abgekühlt. Die kondensierten Bestandteile wurden gesammelt und über GC analysiert:
50% Methylchlorsilane davon:
   6% Dimethylchlorsilan
   4% Dichlormethylsilan
   12% Chlortrimethylsilan
   7% Trichlormethylsilan
   21% Dichlordimethylsilan
12% Alkylchlorsilane mit Ethyl und Propylgruppen
1% nicht gespaltenen Disilane
10% Siloxane (wie im Ausgangsmaterial)
12% Silamethylene (wie im Ausgangsmaterial)
15% nicht identifizierte Verbindungen

Nach 72 h Betriebsstunden und Dosierung von ca. 150kg hochsiedendem Rückstand wurde der Reaktor geöffnet und begutachet. Die Reaktorwand und im Einsprühbereich der Düse wurde nur sehr wenig Feststoff gefunden. Der Feststoff war sehr feinteilig, trocken und mechanisch einfach zu entfernen.

## Patentansprüche

1. Kontinuierliches Verfahren zur Herstellung von Alkylchlorsilanen aus den Rückständen der Direktsynthese von Alkylchlorsilanen, welche flüssige Bestandteile mit einem Siedepunkt von mindestens 70°C bei 1013 hPa und gegebenenfalls Feststoffe aufweisen mit Chlorwasserstoff, bei dem die Rückstände mit höchstens 200 °C und Chlorwasserstoff mit einer entsprechend höheren Temperatur von mindestens 450 °C in einen Reaktor eingeleitet werden, so dass sich eine Reaktionstemperatur von 400 bis 800 °C einstellt.

2. Verfahren nach Anspruch 1, bei dem Alkylchlorsilane der allgemeinen Formel RₐH_{b}SiCl_{4-a-b} hergestellt werden, in der a die Werte 1, 2, 3 oder 4, b die Werte 0, 1 oder 2 und R einen Methyl-, Ethyl-, Butyl- oder Propylrest bedeuten.

3. Verfahren nach Anspruch 1 oder 2, bei dem im Rückstand Disilane enthalten sind und bei dem bezogen auf die Disilane die 2- bis 60-fache äquivalente molare Menge an Chlorwasserstoff eingeleitet wird.

4. Verfahren nach Anspruch 1 bis 3, bei dem der Reaktor ein Rohrreaktor ist.

5. Verfahren nach Anspruch 1 bis 4, welches bei 1000 bis 3000 hPa durchgeführt wird.

6. Verfahren nach Anspruch 1 bis 5, bei dem im Anschluss an die Reaktion überschüssiger Chlorwasserstoff von gebildeten Alkylchlorsilanen befreit und wieder in den Reaktor zurückgeführt wird.

## Claims

1. Continuous process for preparing alkylchlorosilanes from the residues of direct synthesis of alkylchlorosilanes, which comprise liquid constituents with a boiling point of at least 70°C at 1013 hPa and, where appropriate, comprise solids, with hydrogen chloride, by passing the residues at a temperature not above 200°C and hydrogen chloride at a correspondingly higher temperature of at least 450°C into a reactor so that the resultant reaction temperature is from 400 to 800°C.

2. Process according to Claim 1, in which alkylchlorosilanes of the general formula RₐH_{b}SiCl_{4-a-b} are prepared, where a takes the values 1, 2, 3, or 4, b takes the values 0, 1, or 2, and R is a methyl, ethyl, butyl, or propyl radical.

3. Process according to Claim 1 or 2, in which disilanes are present in the residue, and in which the amount of hydrogen chloride introduced is from 2 to 60 molar equivalents, based on the disilanes.

4. Process according to any of Claims 1 to 3, in which the reactor is a tubular reactor.

5. Process according to any of Claims 1 to 4, which is carried out at from 1000 to 3000 hPa.

6. Process according to any of Claims 1 to 5, in which, following the reaction, excess hydrogen chloride is freed from alkylchlorosilanes formed and is returned into the reactor.

## Revendications

1. Procédé continu pour la préparation d'alkylchlorosilanes à partir des résidus de la synthèse directe d'alkylchlorosilanes, qui présentent des constituants liquides présentant un point d'ébullition d'au moins 70°C à 1013 hPa et le cas échéant des solides, avec de l'acide chlorhydrique, dans lequel les résidus sont introduits dans un réacteur à au maximum 200°C et l'acide chlorhydrique est introduit à une température correspondante supérieure d'au moins 450°C, de telle manière qu'il se règle une température de réaction de 400 à 800°C.

2. Procédé selon la revendication 1, dans lequel on prépare des alkylchlorosilanes de formule générale RₐH_{b}SiCl_{4-a-b} dans laquelle a vaut 1, 2, 3 ou 4, b vaut 0, 1 ou 2 et R signifie un radical méthyle, éthyle, butyle ou propyle.

3. Procédé selon la revendication 1 ou 2, dans lequel des disilanes sont contenus dans le résidu et dans lequel on introduit 2 à 60 fois la quantité équivalente molaire d'acide chlorhydrique par rapport aux disilanes.

4. Procédé selon les revendications 1 à 3, dans lequel le réacteur est un réacteur tubulaire.

5. Procédé selon les revendications 1 à 4, qui est réalisé à 1000 à 3000 hPa.

6. Procédé selon les revendications 1 à 5, dans lequel, après la réaction, l'acide chlorhydrique en excès est libéré des alkylchlorosilanes formés et est à nouveau recyclé dans le réacteur.
